# EUROPÄISCHE PATENTANMELDUNG

(11) **EP 1 571 267 A2**
(43) Veröffentlichungstag der Anmeldung: **07.09.2005**
(21) Anmeldenummer: 05000686.5
(22) Anmeldetag: 14.01.2005
(51) Int. Cl.: E02F 9/22, F15B 1/02, B60G 17/056

(54) **Federungsvorrichtung**

(30) Priorität: 02.03.2004 DE 102004010053
(71) Anmelder: Hydac System GmbH, 66280 Sulzbach/Saar (DE)
(72) Erfinder: Kühn, Michael, 23936 Wotenitz (DE)
(74) Vertreter: Bartels, Martin Erich Arthur

(57) **Zusammenfassung**

Die Erfindung betrifft eine Federungsvorrichtung für mindestens einen abzufedernden Antriebsteil (12), das mit einer der Federung dienenden, aktivierbaren Speichereinrichtung (10) und mit einem Tankanschluß (T) mittels mindestens einer Ventileinheit (20;52) fluidführend verbindbar ist. Dadurch, dass die Speichereinrichtung (10) vor dem Aktivieren der Federung auf annähernd den gleichen Druck gebracht ist, der als Tragdruck im Antriebsteil (12) vorhanden ist und dass für das dahingehende Ausgleichen des Druckes ein Druckdifferenzschalter (34) eingesetzt ist, ist es möglich, bei Zuschalten der eigentlichen Federung in Form der Speichereinrichtung vorab in kürzester Zeit einen Niveauausgleich für den Druck herbeizuführen, so dass der eingesetzte Federungsdruck genau auf den Druck des jeweiligen Antriebsteils in Form eines Hydraulik- oder Arbeitszylinders aufsetzt, den dieser bedingt durch vorangegangene Lastbetätigungsvorgänge eben inne hat.

## Beschreibung

Die Erfindung betrifft eine Federungsvorrichtung für mindestens einen abzufedernden Antriebsteil, das mit einer der Federung dienenden, aktivierbaren Speichereinrichtung und mit einem Tankanschluß mittels mindestens einer Ventileinheit fluidführend verbindbar ist.

Eine dahingehende Federungsvorrichtung ist durch die EP-A-1 157 963 bekannt. Die bekannte Lösung bezieht sich auf einen sog. Radlader mit einem schwenkbaren Auslegerarm, der darüber hinaus auch in seiner Länge veränderbar ist. Zum Bewegen des Auslegerarmes ist ein hydraulisches Antriebssystem vorgesehen mit einzelnen Hub- oder Arbeitszylindern, wobei vorzugsweise jedem bewegbaren Auslegerarmteil ein eigenständiger Arbeitszylinder als Antriebsteil zugeordnet ist. Mit den Arbeitszylindern des hydraulischen Systems ist es möglich, die Schwenkbewegung für den Auslegerarm auszulösen; diesen durch Ein- oder Ausfahren in der Länge zu verändern und über einen weitere Arbeitszylindereinheit kann eine beispielsweise an der freien Endseite des Auslegerarmes angeordnete Arbeitsgerätschaft, beispielsweise in Form einer Lastgabel, angesteuert werden. Dabei kann die Schwenkbewegung für den Auslegerarm über einen Parallelogrammtrieb realisiert werden, um die Arbeitshöhe des Auslegerarmes gegenüber dem Fahrzeugchassis gemäß den vorgegebenen Arbeitsbedingungen für den Radlader zu verändern.

Neben diesen genannten Antriebsmitteln in Form von Arbeitszylindern weist das hydraulische System bei der bekannten Radladerlösung eine Federungsvorrichtung auf, bestehend aus mindestens einem Hydraulikspeicher (Hydrospeicher) als Speichereinrichtung und mit mindestens zwei ansteuerbaren Ventileinheiten, die es erlauben, die Speichereinrichtung mit dem jeweiligen Hydraulikzylinder zu verbinden oder mit dem Umgebungs- oder Tankdruck in Form eines Tankanschlusses für die Federungsvorrichtung. Mit dieser Federungsvorrichtung ist es nun möglich, sowohl bei angehaltenem Antriebsteil, dessen beispielsweise durch eine Last vorgegebene Eigenbewegung abzudämpfen, als auch eine Dämpfung vorzunehmen, wenn das Antriebsteil betätigt wird, also mithin bei der bekannten Lösung der Kolben des Hydraulikzylinders ein- oder ausfährt. So lassen sich beispielsweise bei einer angehobenen Stellung des Auslegerarmes unter zu bewegender Last mittels der Arbeitsmaschine in Form des Radladers die damit einhergehenden Schwingbewegungen am Auslegerarm über die bekannte Federungsvorrichtung abdämpfen, wobei die bekannte Lösung es vorsieht, die dahingehende Dämpfung beizubehalten, wenn der Arbeitszylinder und mithin das Antriebsteil weiter betätigt wird, beispielsweise um dergestalt den Auslegerarm anzuheben oder abzusenken.

Obwohl die dahingehend bekannte Lösung zu insgesamt einem guten Dämpfungs- und Federungsverhalten führt und insgesamt eine sichere Betriebsweise für das hydraulische System für den Radlader ermöglicht, kann es zu Problemen kommen, wenn der abzufedernde Arbeitszylinder als Antriebsteil unter einer vorgebbaren Lastsituation steht, die mit einem entsprechenden Druckniveau, insbesondere auf der Kolbenseite des jeweiligen Arbeitszylinders, einhergeht und im skizzierten Sinne die Federung über den jeweiligen Hydraulikspeicher als Speichereinrichtung zugeschaltet wird, wenn diese nicht dasselbe Druckniveau aufweist, wie das eingesetzte Antriebsteil in Form des jeweiligen Arbeitszylinders. In Abhängigkeit des unterschiedlichen Druckniveaus kann es dann zu deutlichen Ein- und Ausschwingvorgängen bei zugeschalteter Federung am jeweiligen Arbeitszylinder kommen, die in Abhängigkeit des Niveauunterschiedes erheblich sein können und zu sicherheitstechnisch bedenklichen Auslenkbewegungen am Antriebsteil führen können und mithin an dem hier zu bewegenden, mechanischen Bauteil, beispielsweise in Form des genannten Auslegerarmes. Ferner kann es ungewollt, bedingt durch die Schwingvorgänge in hydraulischen Systemen, zu einem Wippen am Auslegerarm kommen, bis die verschiedenen Druckniveaus von jeweiligem Arbeitszylinder und Hydraulikspeicher sich aneinander angeglichen haben. Neben dem bereits genannten Sicherheitsrisiko kann es beim Anpassen der verschiedenen Druckniveaus auch zu Druckspitzen innerhalb der Verrohrung der Ventileinheiten kommen, was das gesamte hydraulische System der Arbeitsgerätschaft schädigen kann.

Demgemäß ist bei einer gattungsgemäßen Federungsvorrichtung nach der US 6,279,316 vorgeschlagen worden, einen hydropneumatischen Ausleger-Federungsblock mit Fremddruckaufladung mit einem Absperrventil zu versehen, das mit einem ersten Logikelement zusammenwirkt und das mit einem zusätzlichen Logikelement ausgestattet ist, um dergestalt eine Druckausgleichsbilanz zu erreichen zwischen Speichereinrichtung und Kolbenraum eines Arbeitszylinders, bevor die eigentliche Federungsdruckverbindung hergestellt ist zwischen dieser Speichereinrichtung und diesem Kolbenraum des Arbeitszylinders. Ferner wird bei dieser bekannten Lösung verlangt, dass das Absperrventil über eine erste Verbindungsleitung mit dem Kolbenraum des Arbeitszylinders verbunden ist.

Die genannten Logikelemente bei der bekannten Federungsvorrichtung sind über sog. Cartridge - Ventile realisiert, die relativ teuer sind und mithin zu einer kostenintensiven Realisierung der bekannten Federungsvorrichtung führen. Auch sind Hemmungen durch den Einsatz von Cartridge - Ventilen als Logikelemente im rauhen Alltagsbetrieb bei Arbeitsmaschinen nicht immer mit Sicherheit auszuschließen.

Ausgehend von diesem Stand der Technik liegt der Erfindung die Aufgabe zugrunde, unter Beibehalten der Vorteile der bekannten Lösungen diese dahingehend weiter zu verbessern, dass die beschriebenen Nachteile nicht auftreten, insbesondere Sicherheitsrisiken und Überlastungen im hydraulischen System mit Sicherheit vermieden sind und sich die Federungsvorrichtung kostengünstig und funktionssicher realisieren läßt. Eine dahingehende Aufgabe löst eine Federungsvorrichtung mit den Merkmalen des Patentanspruches 1 in seiner Gesamtheit.

Dadurch, dass gemäß dem kennzeichnenden Teil des Patentanspruches 1 die Speichereinrichtung vor dem Aktivieren der Federung auf annähend den gleichen Druck gebracht ist, der als Tragdruck im Antriebsteil vorhanden ist und dass für das dahingehende Ausgleichen des Druckes ein Druckdifferenzschalter eingesetzt ist, ist es möglich, bei Zuschalten der eigentlichen Federung in Form der Speichereinrichtung vorab in kürzester Zeit einen Niveauausgleich für den Druck herbeizuführen, so dass der eingesetzte Federungsdruck genau auf den Druck des jeweiligen Antriebsteils in Form eines Hydraulik- oder Arbeitszylinders "aufsetzt", den dieser bedingt durch vorangegangene Lastbetätigungsvorgänge eben inne hat. Eine für die Umgebung gefährliche, ungewollte Aus- und Einfahrbewegung des Kolbenstangenteils des jeweiligen Arbeitszylinders ist somit mit Sicherheit vermieden und es kommt auch nicht zu ungewollten Wippbewegungen am Antriebsteil und mithin an mechanischen Komponenten, wie einem Auslegerarm od. dgl., die durch das Antriebsteil angesteuert und betätigt werden.

Da darüber hinaus bei der erfindungsgemäßen Lösung das gewünschte Druckniveau sich unmittelbar einstellt, sind Druckspitzen im hydraulischen System vermieden, was der Langlebigkeit des hydraulischen Gesamtsystems zugute kommt. Des weiteren ist die erfindungsgemäße Lösung funktionssicher und in der Herstellung kostengünstig zu realisieren, wozu mit beiträgt, dass als Logikelement anstelle von den bekannten Cartridge - Ventilen ein Druckdifferenzschalter im Sinne der Erfindung Verwendung findet, der auch als elektronisches Bauteil oder mit Elektronikkomponenten versehen, ausgeführt sein kann.

Bei einer bevorzugten Ausführungsform der erfindungsgemäßen Federungsvorrichtung hat der Druckdifferenzschalter auf der einen Seite als Eingangsdruck den Druck in der Speichereinrichtung und auf der anderen Seite den Tragdruck im Antriebsteil anstehen und abhängig von der sich hieraus ergebenden Druckdifferenz werden Schaltsignale an mindestens ein Schaltventil weitergegeben. Vorzugsweise ist dabei der Druckdifferenzschalter von einem Relais mit Zeitverzögerungsglied ansteuerbar. Bei der dahingehenden Ausführungsform wird die Speichereinrichtung vor dem Aktivieren der eigentlichen Federung auf annähernd den gleichen Systemdruck gebracht, der als Tragdruck in den Hubzylindern ansteht. Dabei wird die Speichereinrichtung (Hydraulikspeicher) direkt aus dem Hydrauliksystem des Rad-Teleskopladers oder der sonstigen Arbeitsmaschine geladen. Da bei dieser Ausführungsform der Federungsvorrichtung zum Aufladen des Federungsspeichers kein Volumen aus dem Hubzylinder entnommen wird, sind bei der Aktivierung der Federungsvorrichtung undefinierte Bewegungen mit Sicherheit ausgeschlossen.

Bei einer anderen, bevorzugten Ausführungsform der erfindungsgemäßen Federungsvorrichtung steuert der Druckdifferenzschalter das Schaltventil an zum Herstellen einer fluidführenden Verbindung von Speichereinrichtung mit Antriebsteil, wobei das Schaltventil derart mit einem Rückschlagventil versehen ist, dass die Speichereinrichtung mit dem Tragdruck des Antriebsteils ausschließlich aufladbar ist. Auf diese Art und Weise wird vor dem eigentlichen Aktivieren der Federung der Druck zwischen dem Hydraulikspeicher als Speichereinrichtung und dem Hubzylinder als Antriebsteil über den Druckdifferenzschalter und das Ventil entsprechend ausgeglichen.

Weitere vorteilhafte Ausführungsformen sind Gegenstand der sonstigen Unteransprüche.

Im folgenden wird die erfindungsgemäße Federungsvorrichtung anhand der Zeichnung und zweier Ausführungsbeispiele näher erläutert. Dabei zeigen in prinzipieller und nicht maßstäblicher Darstellung in der Art von Schaltplänen die
- Fig.1: die erste Ausführungsform und die
- Fig.2: die zweite Ausführungsform der erfindungsgemäßen Federungsvorrichtung.

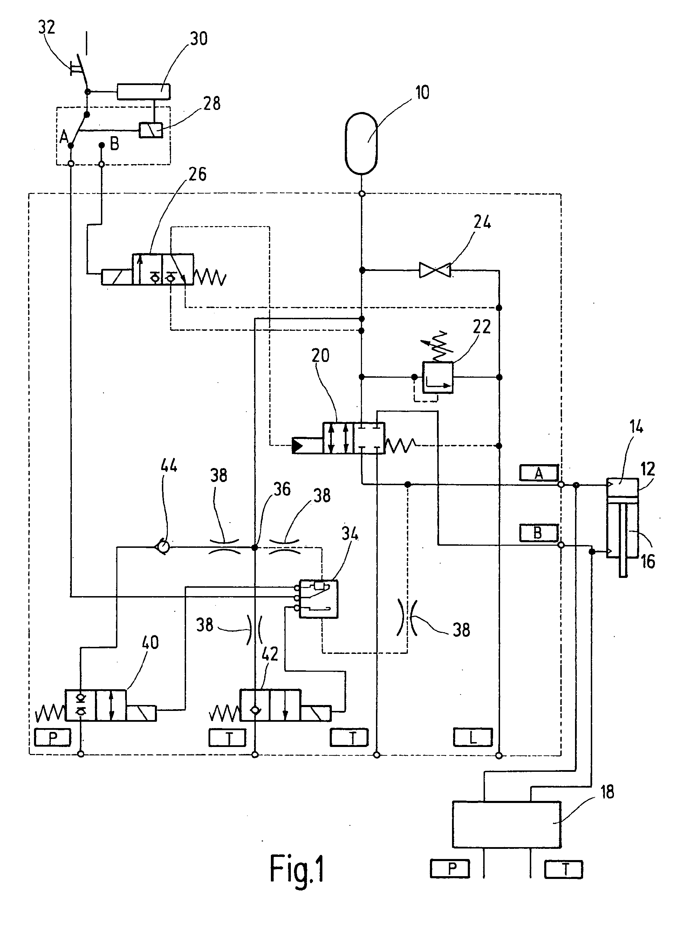

Ziel beider Schaltungen ist es, den Ausleger eines Rad- oder Teleskopladers (nicht dargestellt) mit einer zuschaltbaren, hydropneumatischen Federung zu versehen. Bei abgeschalteter (blockierter) Federung kann sich die Belastung des Ausleger-Hubzylinders durch Längenänderung des Teleskopauslegers und durch Be- oder Entladung der Schaufel bzw. Lastgabel verändern. Bei nachfolgender Aktivierung der Federung sollen undefinierte Bewegungen, die durch den in den Hydraulikspeichern eingesperrten Druck verursacht werden können, vermieden werden. Zum Druckausgleich zwischen dem Federungsspeicher als Speichereinrichtung 10 und dem Hubzylinder als Antriebsteil 12 darf nur der Druck im Federungsspeicher verändert werden. Zum Aufladen des Federungsspeichers darf bei der Ausführungsform gemäß der Fig.1 kein Volumen aus dem Hubzylinder entnommen werden.

Die in der Fig.1 gezeigte erfindungsgemäße Federungsvorrichtung dient für mindestens ein abzufederndes Antriebsteil 12 in Form eines üblichen hydraulischen Arbeitszylinders, dessen Kolbenteil einen Kolbenraum 14 von einem Stangenraum 16 trennt. Die Kolbenstange ist mit einer nicht näher dargestellten Arbeitseinheit des Hydraulikzylinders verbunden, beispielsweise in Form einer Schaufel oder in Form einer Lastgabel, einer Arbeitsmaschine mit Teleskopausleger. Zur Ansteuerung des dahingehenden Antriebsteils 12 dient ein Steuerblock-Radlader 18, der sowohl an einen Pumpenanschluß P als auch an einen Tankanschluß T angeschlossen ist und der auf die beiden Zuführleitungen A, B für das Antriebsteil 12 einwirkt. Die Verbindungsleitung A ist auf die Ausgangsseite eines 4/2-Wege-Ventils 20 angeschlossen, wohingegen die Verbindungsleitung B diagonal gegenüberliegend auf die Eingangsseite des dahingehenden Ventils mündet. Ferner ist das Wege-Ventil 20 auf seiner Eingangsseite an die Speichereinrichtung 10 angeschlossen. Auf der Ausgangsseite mündet das Wege-Ventil 20 des weiteren in den Tankanschluß T. Das Druckbegrenzungsventil 22 schützt die Speichereinrichtung 10 vor Überdruck und durch das Absperrventil 24 kann der Druck aus dem Hydraulikspeicher als Speichereinrichtung 10 beispielsweise vor Durchführen von Wartungsarbeiten abgelassen werden.

Ein 3/2-Wege-Ventil 26 ist auf seiner Eingangsseite an den Steuereingang des 4/2-Wege-Ventils 20 angeschlossen und sein Ausgang mündet einmal in die Verbindungsleitung zwischen Speichereinrichtung 10 und Wege-Ventil 20 sowie in die Ablaufleitung L zwischen Absperrventil 24 und Ablauf L. Der Steuereingang des 3/2-Wege-Sitzventils ist an ein Relais 28 mit Verzögerungsschalter 30 angeschlossen. Das dahingehend gebildete Zeitverzögerungsglied läßt sich über einen Schalter 32 entsprechend betätigen. Neben dem Ausgang B für den Steuereingang des Sitzventils 26 weist das Relais 28 einen Ausgang A auf, der in einen Druckdifferenzschalter 34 mündet. Als Steuerdrücke liegen an dem Druckdifferenzschalter 34 einmal der Speicherdruck der Speichereinrichtung 10 an, der am Knotenpunkt 36 abgegriffen wird, und einmal der Druck in der Verbindungsleitung A zwischen Antriebsteil 12 und Wege-Ventil 20 an. Die dahingehenden Steuerdrücke sind über Drosseln 38 angedrosselt. Die weiteren beiden Eingänge des Druckdifferenzschalters 34 münden einmal auf die Steuereingangsseite eines Aufladeventils 40 und einmal auf die Steuereingangsseite eines Ablaßventils 42. Das Aufladeventil 40 ist an den Pumpenanschluß P druckführend angeschlossen und das Ablaßventil 42 an den Tankanschluß T. Die beiden Eingangsseiten der beiden Ventile 40,42 münden in den Knoten 36, und zwar gleichfalls über Drosseln 38, und wirken somit auf den Steuereingangsdruck ein für den Druckdifferenzschalter 34. Der fluidführende Weg zwischen der Drossel 38 und der Eingangsseite für das Ventil 40 ist über ein Rückschlagventil 44 abgesichert, das in Richtung der Drossel 38 öffnet und das für die Funktion der Schaltung nicht zwingend notwendig ist.

Zum besseren Verständnis wird nunmehr die erfindungsgemäße Federungsvorrichtung anhand eines praktischen Ausführungsbeispiels nach dem Schaltplan näher erläutert.

Vor dem Aktivieren der Federung wird zunächst der Schalter 32 geschlossen. Das Relais 28 mit Verzögerungsschalter 30 ist in Schaltstellung A und bestromt insoweit den Druckdifferenzschalter 34.

Ist in dem einen ersten Ausgangszustand der Druck in der Speichereinrichtung 10 höher als im Antriebsteil 12 in Form des Hubzylinders, bestromt der Druckdifferenzschalter 34 das Ablaßventil 42. Über das Ablaßventil 42 kann somit Fluid (Hydrauliköl) aus der Speichereinrichtung 10 entweichen. Dadurch baut sich der Druck in der Speichereinrichtung 10 ab. Wenn sich eine bestimmte Druckdifferenz zwischen Speichereinrichtung 10 und Antriebsteil 12 eingestellt hat, schaltet der Druckdifferenzschalter 34 das Ablaßventil 42 auf Neutralstellung (geschlossen).

Bei dem anderen zweiten Ausgangszustand ist der Druck in der Speichereinrichtung 10 geringer als im Antriebsteil 12 und der Druckdifferenzschalter 34 bestromt das Aufladeventil 40. Über diese Aufladeventil 40 wird dann Hydraulikmedium (Öl) aus dem Hydrauliksystem des Rad-Teleskopladers direkt in die Speichereinrichtung 10 gepumpt. Dadurch erhöht sich der Druck in der Speichereinrichtung 10. Wenn sich eine bestimmte Druckdifferenz zwischen Speichereinrichtung 10 und Antriebsteil 12 in Form des Hubzylinders eingestellt hat, schaltet der Druckdifferenzschalter 34 das Ablaßventil 42 auf Neutralstellung (geschlossen).

Nach einer vorgebbaren, festgelegten Zeit schaltet dann das Relais 28 mit Verzögerungsschalter 30 auf die Schaltstellung B und bestromt das 3/2-Wege-Sitzventil 26, welches als Vorsteuerventil das 4/2-Wege-Ventil 20 öffnet. Das 4/2-Wege-Ventil 20 verbindet dann die Speichereinrichtung 10 mit der Kolbenseite 14 des Hubzylinders als Antriebsteil 12 und die Stangenseite 16 des Antriebsteils 12 mit dem Tankanschluß T. Ist das Relais 28 in der Schaltstellung B, wird der Druckdifferenzschalter 34 nicht mehr mit Strom versorgt. Dadurch können die beiden Ventile 40,42 unabhängig von der Druckdifferenz zwischen Speicherdruck und Federungszylinderdruck bei aktivierter Federung nicht mehr geöffnet werden und sind insoweit gesperrt.

Die dahingehende Hubwerk-Federung mit Fremddruckaufladung des Federungsspeichers 10 ermöglicht es, dass die Speichereinrichtung 10 vor dem eigentlichen Aktivieren der Federung auf annähernd den gleichen Druck gebracht wird, der als Tragdruck in den Hubzylindern auf der Kolbenseite 14 ansteht. Ferner wird der Hydraulikspeicher als Teil der Speichereinrichtung 10 direkt aus dem Hydrauliksystem des Rad-Teleskopladers geladen. Dergestalt sind ungewollte oder undefinierte Bewegungen bei Inbetriebnahme der Federung nach vorheriger Blockierung weitgehend ausgeschlossen. Der Druckdifferenzschalter 34 ist als einzelnes Systembauteil ausgelegt, kostengünstig in der Anschaffung und funktionssicher im Betrieb, insbesondere sind Hemmungen, auch im rauhen Alltagsbetrieb, auszuschließen.

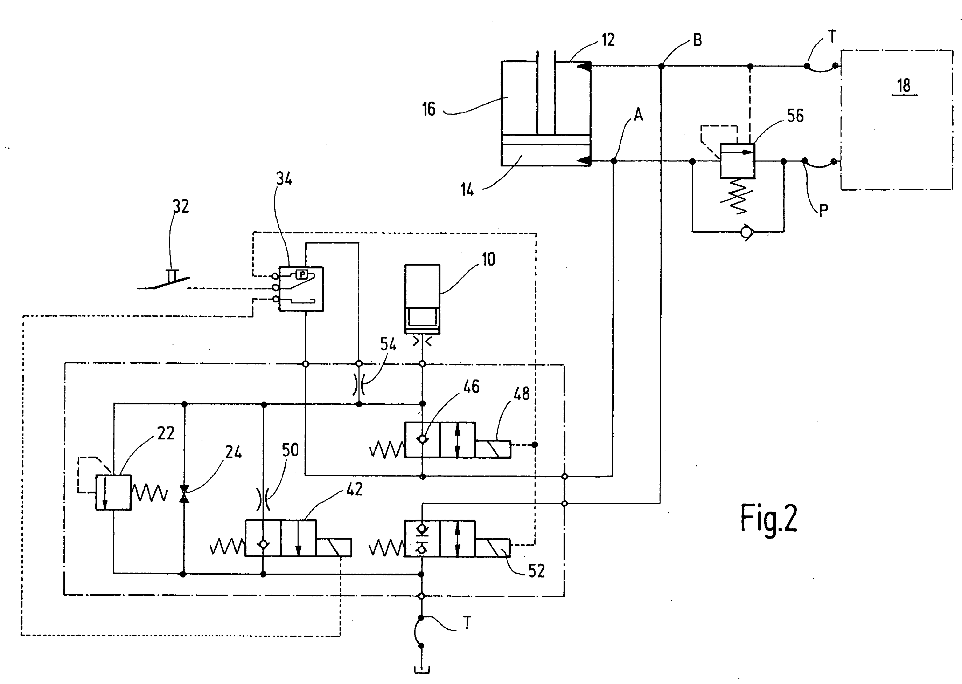

Bei der Ausführungsform nach der Fig.2 werden dieselben Bauteile mit denselben Bezugszeichen bezeichnet wie bei dem Ausführungsbeispiel nach der Fig.1, und die geänderte Ausführungsform wird nur noch insofern erläutert, als sie sich wesentlich von der vorangegangenen unterscheidet.

Auch bei dem Ausführungsbeispiel nach der Fig.2 liegt das Problem zugrunde, dass bei abgeschalteter (blockierter) Federung sich die Belastung des Auslegerhubzylinders 12 durch Längenänderung des Teleskopauslegers und durch Be- oder Entladung der Schaufel bzw. Lastgabel verändern kann. Bei nachfolgender Aktivierung der Federung sollen undefinierte Bewegungen, die durch den in den Hydraulikspeichern 10 eingesperrten Druck verursacht werden können, vermieden werden. Hierzu dient die Ausführungsform eines hydropneumatischen Ausleger-Federungsblockes als Federungsvorrichtung nach der Fig.2.

Der Hydraulikspeicher 10 ist ständig über ein Rückschlagventil 46 eines Federungssperrventils 48 mit der Kolbenseite 14 des Hubzylinders als Antriebsteil 12 verbunden und wird demgemäß mit dem maximalen Druck, der im jeweiligen Arbeitsspiel auftritt, aufgeladen. Vor dem Aktivieren der Federung wird der Druckdifferenzschalter 34 bestromt. Ist der Druck im Speicher 10 höher als im Hubzylinder 12, bestromt der Druckdifferenzschalter 34 das Ablaßventil 42. Über die Drossel 50 und das Ablaßventil 42 kann dann Hydraulikmedium (Öl) aus dem Speicher 10 in Richtung Tankanschluß T entweichen. Dadurch baut sich der Druck in der Speichereinrichtung 10 entsprechend ab.

Wenn sich eine bestimmte Druckdifferenz zwischen Speichereinrichtung 10 und Antriebsteil 12 eingestellt hat, schaltet der Druckdifferenzschalter 34 das Ablaßventil 42 auf Neutralstellung (geschlossen) und bestromt dann sowohl das Federungsventil 48 als auch ein Nachsaugventil 52. Das Federungsventil 48 verbindet dann den Speicher 10 mit der Kolbenseite 14 des Hubzylinders 12 und das Nachsaugventil 52 verbindet die Stangenseite 16 des Hubzylinders 12 mit dem Tankanschluß T. Die weitere Drossel 54 in der Verbindungsleitung zwischen Steuereingangsseite des Druckdifferenzschalters 34 und Speicherausgangsseite 10 dient der Dämpfung für die dahingehend genannte Verbindung. Das Druckbegrenzungsventil 22 schützt wiederum den Hydraulikspeicher 10 vor Überdruck und durch das Absperrventil 24 zwischen Kolbenseite des Speichers und Tankanschluß T besteht eine Entleermöglichkeit für den Speicher, beispielsweise zu Wartungszwecken. Ein weiteres Druckbegrenzungsventil 56 zwischen den Anschlüssen A, B des Steuerblock-Radladers 18 dient der Absicherung der dahingehenden Steuerblockschaltung.

Die erfindungsgemäße Federungsvorrichtung nach der Fig.2 ist dadurch charakterisiert, dass die Speichereinrichtung 10 über das Rückschlagventil 46 mit dem Tragdruck aus dem Antriebsteil 12 (Hubzylinder) aufgeladen wird und dass vor dem Aktivieren der Federung der Druck zwischen der Speichereinrichtung 10 und dem Antriebsteil 12 über den Druckdifferenzschalter 34 und nur einem Ventil 48 ausgeglichen wird. Das weitere Lasthalte- oder Senkbremsventil 56 ist wiederum über ein Rückschlagventil 58 gegen Überlast gesichert; es dient als Rohrbruchsicherung.

Mit den genannten beiden erfindungsgemäßen Federungsvorrichtungen sind undefinierte, die Sicherheit beeinträchtigende Bewegungen der angesteuerten mechanischen Teile einer Arbeitsgerätschaft oder Arbeitsmaschine, wie einem Teleskoplader, mit Sicherheit vermieden und durch die sanfte Entsperrung sowie Aufschaltung des Federungsdruckes sind das hydraulische System schädigende Druckspitzen jedenfalls vermieden.

## Patentansprüche

1. Federungsvorrichtung für mindestens einen abzufedernden Antriebsteil (12), das mit einer der Federung dienenden, aktivierbaren Speichereinrichtung (10) und mit einem Tankanschluß (T) mittels mindestens einer Ventileinheit (20;52) fluidführend verbindbar ist, **dadurch gekennzeichnet, dass** die Speichereinrichtung (10) vor dem Aktivieren der Federung auf annähernd den gleichen Druck gebracht ist, der als Tragdruck im Antriebsteil (12) vorhanden ist und dass für das dahingehende Ausgleichen des Druckes ein Druckdifferenzschalter (34) eingesetzt ist.

2. Federungsvorrichtung nach Anspruch 1, **dadurch gekennzeichnet, dass** der Druckdifferenzschalter (34) auf der einen Seite als Eingangsdruck den Druck in der Speichereinrichtung (10) und auf der anderen Seite den Tragdruck im Antriebsteil (12) anstehen hat und abhängig von der sich hieraus ergebenden Druckdifferenz ein Schaltsignal an mindestens ein Schaltventil (20;48) weitergibt.

3. Federungsvorrichtung nach Anspruch 1 oder 2, **dadurch gekennzeichnet, dass** der Druckdifferenzschalter (34) das Schaltventil (48) ansteuert zum Herstellen einer fluidführenden Verbindung von Speichereinrichtung (10) mit Antriebsteil (12) und dass das Schaltventil (48) derart mit einem Rückschlagventil (46) versehen ist, dass die Speichereinrichtung (10) mit dem Tragdruck des Antriebsteils (12) ausschließlich aufladbar ist.

4. Federungsvorrichtung nach Anspruch 1 oder 2, **dadurch gekennzeichnet, dass** der Druckdifferenzschalter (34) ein Schaltventil (20) derart ansteuert, dass mit dem Druck des Hydrauliksystems, an den die Federungsvorrichtung anschließbar ist, ausschließlich die Speichereinrichtung (10) aufladbar ist und dass ein weiteres Schaltventil (42) ansteuerbar ist, das eine fluidführende Verbindung zwischen Speichereinrichtung (10) und Tankanschluß (T) herstellt.

5. Federungsvorrichtung nach Anspruch 4, **dadurch gekennzeichnet, dass** der Druckdifferenzschalter (34) von einem Relais (28) mit Zeitverzögerungsglied (30) ansteuerbar ist.

6. Federungsvorrichtung nach Anspruch 5, **dadurch gekennzeichnet, dass** das Relais (28) ein Vorsteuerventil (26) ansteuert, das im angesteuerten Zustand ein Wegeventil als Schaltventil (20) betätigt zum Herstellen einer druckführenden Verbindung von Speichereinrichtung (10) mit der Seite (14) des Antriebsteils (12) mit dem Tragdruck.

7. Federungsvorrichtung nach einem der Ansprüche 2 bis 6, **dadurch gekennzeichnet, dass** zumindest ein Teil der Eingangsdrücke für den Druckdifferenzschalter (34) mittels einer Drossel (38;54) beeinflußbar ist.

8. Federungsvorrichtung nach einem der Ansprüche 1 bis 7, **dadurch gekennzeichnet, dass** die Speichereinrichtung (10) ein Hydrospeicher, vorzugsweise ein Kolbenspeicher ist und dass das Antriebsteil (12) ein hydraulisch betätigbarer Arbeitszylinder ist, auf dessen Kolbenseite (14) der Tragdruck ansteht.
